# EUROPÄISCHE PATENTSCHRIFT

(11) **EP 2 576 252 B1**
(45) Veröffentlichungstag und Bekanntmachung des Hinweises auf die Patenterteilung: **06.01.2016**
(21) Anmeldenummer: 11724144.8
(22) Anmeldetag: 19.05.2011
(51) Int. Cl.: B60H 1/00

(54) **TEMPERIERVORRICHTUNG UND VERFAHREN ZUR ERZEUGUNG EINES TEMPERIERTEN LUFTSTROMS**
TEMPERATURE CONTROL DEVICE AND METHOD FOR GENERATING A TEMPERATURE CONTROLLED AIR FLOW
DISPOSITIF DE CLIMATISATION ET PROCÉDÉ DE PRODUCTION D'UN FLUX D'AIR CLIMATISÉ

(30) Priorität: 31.05.2010 DE 102010029495
(43) Veröffentlichungstag der Anmeldung: 10.04.2013
(73) Patentinhaber: MAHLE Behr GmbH & Co. KG, 70469 Stuttgart (DE)
(72) Erfinder: SCHALL, Matthias, 73760 Ostfildern-Ruit (DE)
(74) Vertreter: Grauel, Andreas
(86) Internationale Anmeldenummer: PCT/EP2011/058189
(87) Internationale Veröffentlichungsnummer: WO 2011/151196

(56) Entgegenhaltungen:
- EP-A1- 1 510 375
- EP-A1- 1 616 733
- DE-A1- 19 713 197
- US-A1- 2003 056 531

## Beschreibung

Die vorliegende Erfindung bezieht sich auf eine Temperiervorrichtung für ein Fahrzeug, wie z.B. offenbart in EP 1616733 A1.

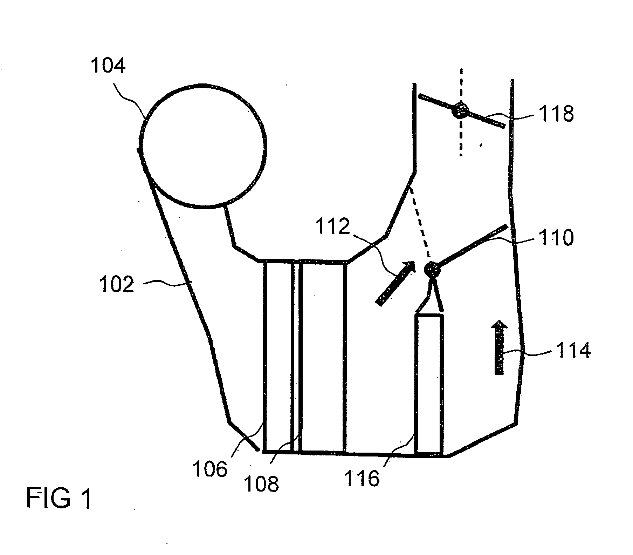

Fig. 1 zeigt eine schematische Darstellung eines Klimageräts mit einer luftseitigen Regelung. Das Klimagerät weist ein Gehäuse 102 auf, in das durch ein Gebläse 104 ein Luftstrom eingeblasen wird. Der Luftstrom wird durch einen Filter 106 und einen Verdampfer 108 geführt. Anschließend verzweigt sich der Luftstrom und folgt abhängig von einer Stellung einer Mischklappe 110 entweder einem Kaltweg 112 oder einem Warmweg 114, der über einen Heizkörper 116 führt, zu einem oder mehreren Ausgängen des Gehäuses 102. Der Ausgang / die Ausgänge werden über Absperrklappe(n) 118 freigegeben oder versperrt.

Im Kühlbetrieb können Sollausblastemperaturen über ca. 10°C mit bekannten Klimageräten oder Klimasystemen nicht mehr in allen Fällen direkt am Verdampfer erzeugt werden. Die Ursache dafür kann beispielsweise darin bestehen, dass die minimal zulässige Drehzahl am Kompressor dafür unterschritten werden müsste oder dass der dafür notwendige Förderhub am Kompressor kleiner als der realisierbare Mininmalhub des Kompressors ist.

Bei bestimmten Verdampferbauarten tritt ein materialbedingtes Geruchsereignis bei Verdampfertemperaturen über 10°C ein. Hier wird dann regelungstechnisch die Lufttemperatur nach Verdampfer auf max. 8 - 10°C begrenzt.

Werden höhere Temperaturen benötig müssen diese durch zusätzliche Energiezufuhr im Heizkörper erzeugt werden (Reheat Betrieb). Diese Energie muss aus einer Energiequelle, beispielsweise dem Kraftstoff oder der Batterie des Fahrzeugs, zur Verfügung gestellt werden. Dadurch steigt der Energieverbrauch an, wodurch sich die (Energie-)Effizienz des Klimageräts oder Klimasystems verringert.

Hinsichtlich des Innenraumkomforts haben bekannte Klimageräte ebenfalls Nachteile. Abhängig von der Verdampfertemperatur wird die Luft beim Kühlbetrieb im Verdampfer stark entfeuchtet. Die Verdampfertemperatur entspricht nämlich ungefähr der Taupunkttemperatur der Luft nach dem Verdampfer. Dieser Effekt ist zum einen gewünscht, um die Feuchtigkeit im Innenraum zu reduzieren und damit die Gefahr eines Scheibenbeschlags zu verringern, auf der anderen Seite kann die Feuchte innerhalb der Kabine auf Werte sinken welche außerhalb des komfortablen Bereichs liegen. Beispielsweise besteht bei einer relativen Luftfeuchtigkeit von weniger als 30% die Gefahr der Austrocknung der Schleimhäute.

Es ist die Aufgabe der vorliegenden Erfindung eine verbesserte Temperiervorrichtung für ein Fahrzeug zu schaffen.

Diese Aufgabe wird durch eine Temperiervorrichtung gemäß Anspruch 1 gelöst.

Der vorliegenden Erfindung liegt die Erkenntnis zugrunde, dass sich ein temperierter Luftstrom mit geringerem Energieaufwand und höherer Qualität erzeugen lässt, wenn nicht der gesamte sondern lediglich ein Teil eines zum Erzeugen des temperierten Luftstroms eingesetzter Luftstrom gekühlt wird. Der nicht gekühlte Teil des ursprünglichen Luftstroms kann in einem geeigneten Mengenverhältnis und in einer geeigneten Art und Weise mit dem gekühlten Luftstrom zusammengeführt werden, um den temperierten Luftstrom zu erzeugen. Über eine Regelung des Mengenverhältnisses zwischen gekühltem und ungekühltem Luftstrom kann eine Temperatur des temperierten Luftstroms geregelt werden. Insbesondere kann die Temperatur des temperierten Luftstroms über eine Temperatur des gekühlten Luftstroms hinaus erhöht werden, ohne dass dafür Heizenergie aufgewendet werden müsste. Ebenso kann die Luftfeuchtigkeit des temperierten Luftstroms erhöht werden. Somit ist für die Feuchtekontrolle z.B. kein zusätzlicher Luftbefeuchter im Innenraum des Fahrzeugs erforderlich.

Gemäß einer Ausführungsform wird ein Verfahren zur energieeffizienten Kontrolle der Temperatur nach einem Verdampfer einer Klimaanlage bzw. ein Verfahren zur energieeffizienten Kontrolle der Luftfeuchtigkeit im Fahrzeuginnenraum, durch einen Bypass am Verdampfer verbunden mit der zugehörigen Regelung und Sensoren geschaffen. Dies ermöglicht eine Effizienzsteigerung sowie eine Komfortsteigerung, beispielsweise bei Fahrzeugen mit Klimaanlage.

Nachdem, zumindest bei Kraftfahrzeugen, eine Klimaanlage Serienausstattung ist, bzw. einen sehr hohen Verbreitungsgrad hat, steigen die Anforderungen an die Klimatisierung. Zwei Schwerpunkte sind hier die Energieeffizienz, mit dem Stichwort der CO₂ Reduktion, und der Innenraumkomfort.

Vorteilhafterweise ermöglicht der erfindungsgemäße Ansatz eine Verbesserung des Klimageräts oder Klimasystems, um Lufttemperaturen größer als 10°C nach dem Verdampfer ohne zuheizen zu erzeugen. Weiterhin besteht die Möglichkeit, die Luftfeuchte in der Kabine, zumindest in gewissen Grenzen, zu beeinflussen.

Die vorliegende Erfindung schafft eine Temperiervorrichtung für ein Fahrzeug, mit folgenden Merkmalen: einer ersten Luftführung zum Führen eines ersten Anteils eines Luftstroms; einer Kühleinrichtung, die in der ersten Luftführung angeordnet ist und ausgebildet ist, um den ersten Anteil des Luftstroms zu kühlen; einer zweiten Luftführung zum Führen eines zweiten Anteils des Luftstroms; einer Mischeinrichtung die ausgebildet ist, um den ersten Luftstrom aus der ersten Luftführung mit dem zweiten Anteil des Luftstroms aus der zweiten Luftführung zu mischen, um einen temperierten Luftstrom zu erzeugen.

Bei der Temperiervorrichtung kann es sich um eine Klimaanlage oder ein Klimagerät handeln. Die Temperiervorrichtung kann in einem Krftfahrzeug angeordnet sein. Der von der Temperiervorrichtung zum Erzeugen des temperierten Luftstroms verwendete Luftstrom kann einer Umgebung der Temperiervorrichtung entnommen werden. Beispielsweise kann der Luftstrom einer Fahrzeugumgebung oder einem Fahrzeuginnenraum des Fahrzeugs entnommen werden. Somit kann der Luftstrom und damit der erste Anteil des Luftstroms, der der ersten Luftführung zugeführt wird, und der zweite Anteil des Luftstroms, der der zweiten Luftführung zugeführt wird, eine einer Umgebungsluft oder einer Innenluft des Fahrzeugs entsprechende Temperatur und Luftfeuchtigkeit aufweisen. Der Luftstrom kann der Temperiervorrichtung über eine Zuführöffnung zugeführt werden und anschließend in den ersten und den zweiten Anteil aufgeteilt werden. Die Luftführungen können als Leitungen oder Kanäle ausgeführt sein. Der gesamte erste Anteil des Luftstroms kann durch die Kühleinrichtung geführt werden. Im aktivierten Zustand ist die Kühleinrichtung ausgebildet, um eine Temperatur des ersten Anteils des Luftstroms zu senken und als einen gekühlten Luftstrom auszugeben. Die Kühleinrichtung kann als Verdampfer ausgebildet sein. Die Mischeinrichtung kann als eine Kammer ausgeführt sein, in die Ausgänge der Luftführungen münden. Der von der Temperiervorrichtung erzeugte temperierte Luftstrom kann in ein Inneres des Fahrzeugs geleitet werden, um den Innenraum des Fahrzeugs zu temperieren.

Die zweite Luftführung ist ausgebildet, um den zweiten Anteil des Luftstroms an der Kühleinrichtung vorbei zu der Mischeinrichtung zu führen. Somit kann die zweite Luftführung zu einer Umgehung der Kühleinrichtung führen, so dass der zweite Anteil des Luftstroms nicht durch die Kühleinrichtung geführt wird.

Die Mischeinrichtung kann als ein Luftkanalabschnitt ausgeformt sein, der eine Zuführöffnung zum Zuführen des ersten Anteils des Luftstroms, eine Zuführöffnung zum Zuführen des zweiten Anteils des Luftstroms und eine Abführöffnung zum Abführen des temperierten Luftstroms aufweist.

Ferner kann die Temperiervorrichtung eine Heizeinrichtung aufweisen, die in Stömungsrichtung des ersten Anteils des Luftstroms nach der Kühleinrichtung angeordnet ist. Die Heizeinrichtung kann ausgebildet sein, um zumindest einen Teil des ersten Anteils des Luftstroms zu erhitzen. Der zweite Anteil des Luftstroms kann in der Mischeinrichtung mit dem teilweise oder vollständig erhitzten ersten Anteil des Luftstroms gemischt werden. Die Heizeinrichtung kann als elektrisches Heizelement, als von einem Fluid durchflossener Heizkörper oder als Wärmepumpensystem ausgebildet sein. Gemäß einer Ausführungsform kann der gesamte erste Anteil des Luftstroms durch die Heizeinrichtung geführt werden und von der aktivierten Heizeinrichtung als erhitzter Luftstrom ausgegeben werden. Eine Temperatur des erhitzten Luftstroms kann durch eine Regelung einer Heizleistung der Heizeinrichtung eingestellt werden, wie es bei einer bekannten wasserseitigen Regelung der Fall ist. Gemäß einer alternativen Ausführungsform kann der erste Anteil des Luftstroms in zwei Teilströme aufgeteilt werden, von denen der eine durch die Heizeinrichtung erhitzt und der andere an der Heizeinrichtung vorbeigeführt wird, ohne von der Heizeinrichtung erhitzt zu werden. Anschließend werden beide Teilströme wieder zusammengeführt, beispielsweise in der Mischeinrichtung. Durch eine Regelung des Mengenverhältnisses zwischen den beiden Teilströmen kann eine Temperatur wieder zusammengeführten Luftstroms geregelt werden, wie es bei einer bekannten luftseitigen Regelung der Fall ist.

Gemäß einer weiteren Ausführungsform kann die Heizeinrichtung ferner ausgebildet sein, um zumindest einen Teil des zweiten Anteils des Luftstroms zu erhitzen. In diesem Fall kann die zweite Luftführung in einem Bereich zwischen der Kühleinrichtung und der Heizeinrichtung mit der ersten Luftführung zusammengeführt werden. Anschließen können der erste Anteil des Luftstroms und der zweite Anteil des Luftstroms vollständig durch die Heizeinrichtung geführt werden. Alternativ können der zusammengeführte erste und zweite Anteil des Luftstroms in zwei Teilströme aufgeteilt werden, von denen der eine durch die Heizeinrichtung erhitzt und der andere an der Heizeinrichtung vorbeigeführt wird, ohne von der Heizeinrichtung erhitzt zu werden. Anschließend werden beide Teilströme wieder zusammengeführt, beispielsweise in der Mischeinrichtung.

Die Temperiervorrichtung kann ein Gehäuse aufweisen, das mindestens eine Einlassöffnung zum Einlassen des Luftstroms und mindestens eine Auslassöffnung zum Auslassen des temperierten Luftstroms aufweist. Die erste Luftführung, die zweite Luftführung und die Mischeinrichtung können innerhalb des Gehäuses angeordnet sein. Wandabschnitte des Gehäuses können Teilbereiche der Luftführungen ausführen. Der Luftstrom kann der Einlassöffnung mittels eines Gebläses zugeführt werden.

Ferner kann die Temperiervorrichtung eine Regeleinrichtung aufweisen, die ausgebildet ist, um ein Mengenverhältnis der Anteile der Luftströme zueinander und/oder eine Kühlleistung der Kühleinrichtung zu regeln. Auch kann die Regeleinrichtung ausgebildet sein, um eine Heizleistung der Heizeinrichtung und/oder eine Strömungsgeschwindigkeit des Luftstroms zu regeln. Die Regeleinrichtung kann ausgebildet sein, um eine Temperatur und/oder eine Feuchtigkeit des temperierten Luftstroms zu regeln. Die Regeleinrichtung kann mindestens eine Stelleinrichtungen, beispielsweise eine Klappe, aufweisen, mittels der eine Aufteilung der Luftströme in die einzelnen Luftführungen eingestellt werden kann.

Dafür kann die Temperiervorrichtung eine Messeinrichtung zum Erfassen einer Temperatur und/oder einer Feuchtigkeit des Luftstroms aufweisen. Die Regeleinrichtung kann ausgebildet sein, um das Mengenverhältnis und/oder die Kühlleistung abhängig von der Temperatur und/oder der Feuchtigkeit zu regeln. Die Messeinrichtung kann innerhalb oder außerhalb der Temperiervorrichtung angeordnet sein.

Die vorliegende Erfindung enthält ferner ein Steuergerät. Das Steuergerät ist ausgebildet, um basierend auf einer Information über eine Temperatur des Luftstroms, einer Information über eine Temperatur des temperierten Luftstroms und/oder eines Innenraums des Fahrzeugs sowie einer Solltemperatur des temperierten Luftstroms und/oder des Innenraums eine Steuerinformation zum Steuern der Temperiervorrichtung zu ermitteln. Zusätzlich ist das Steuergerät ausgebildet, um basierend auf einer Information über eine Feuchtigkeit des Luftstroms, einer Information über eine Feuchtigkeit des temperierten Luftstroms und/oder des Innenraums des Fahrzeugs sowie einer Sollfeuchtigkeit des temperierten Luftstroms und/oder des Innenraums eine Steuerinformation zum Steuern der Temperiervorrichtung zu ermitteln. Die Steuerinformation kann an eine Regeleinrichtung der Temperiervorrichtung bereitgestellt werden. Die Solltemperatur und die Sollluftfeuchtigkeit können von einem Insassen des Fahrzeugs vorgegeben werden.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine Darstellung eines Klimageräts;
- Fig. 2: eine Darstellung eines Klimasystems mit einem erfindungsgemäßen Klimagerät;
- Fig. 3: eine Darstellung eines erfindungsgemäßen Klimageräts; und
- Fig. 4: eine Darstellung eines erfindungsgemäßen Bediengeräts.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

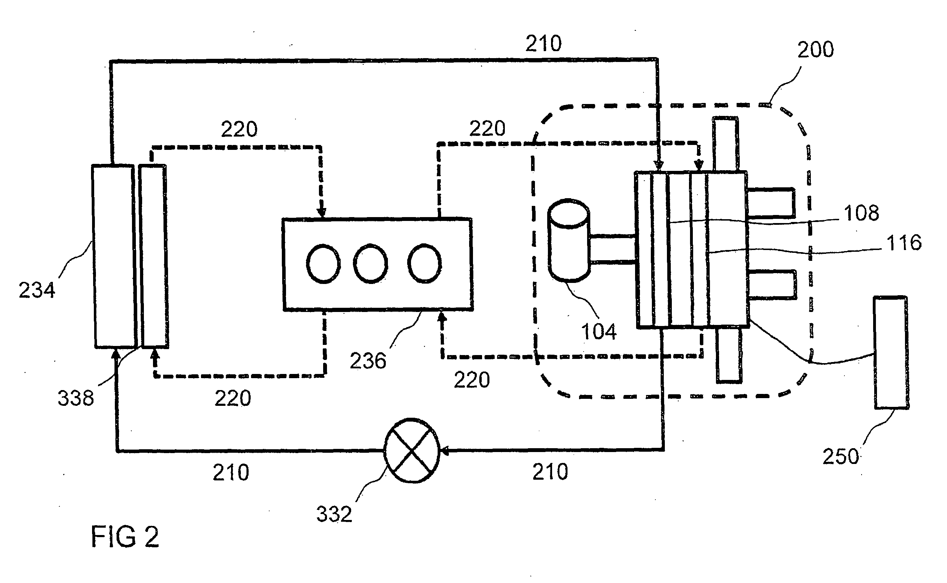

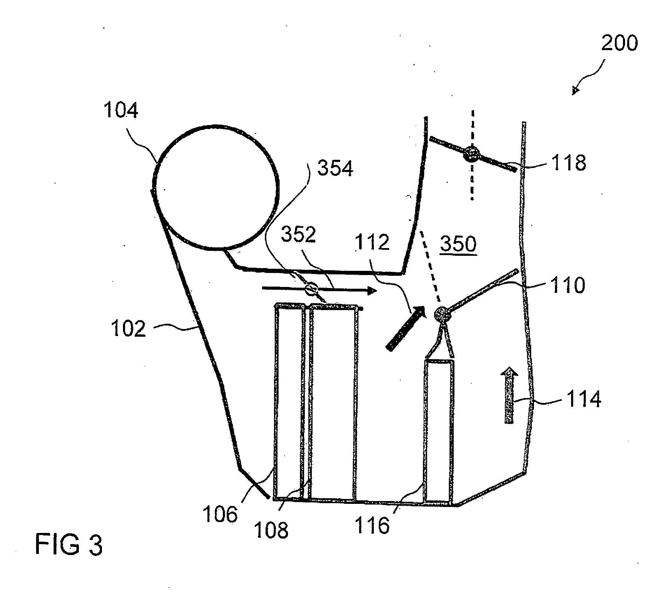

Fig. 2 zeigt ein Klimasystem mit einer Temperiervorrichtung oder einem Klimagerät 200, gemäß einem Ausführungsbeispiel der vorliegenden Erfindung. Das Klimasystem weist einen Kältekreislauf 210 und einen Heizkreislauf 220 auf. Das Klimagerät 200 ist nur schematisch mit dem Gebläse 104, dem Verdampfer 108 und dem Heizköper dargestellt. Ein mögliches Ausführungsbeispiel des Klimageräts 200 ist in Fig. 3 dargestellt.

Der Kältekreislauf 210 verläuft ausgehend von dem Verdampfer 108 über einen Kompressor 332 zu einem Kondensator 234 und von dem Kondensator 234 zurück zu dem Verdampfer 108.

Der Heizkreislauf 220 verläuft ausgehend von einem Motor 236 zu dem Heizkörper 116 und von dem Heizkörper 116 zurück zu dem Motor 236. Der Motor 236 kann zum Antrieb eines Fahrzeugs vorgesehen sein. Ferner verläuft der Heizkreislauf 220 ausgehend von dem Motor 236 zu einem Kühler 338 und von dem Kühler 338 zurück zu dem Motor 236.

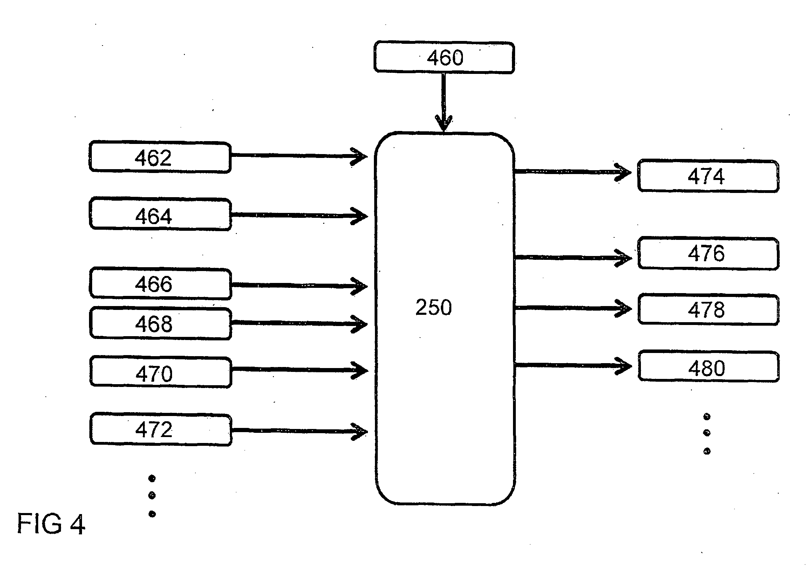

Das Klimasystem weist ferner ein Bediengerät 250 auf, über das das Klimasystem bedient werden kann. Das Klimasystem kann in einem Fahrzeug angeordnet sein, so dass es über das Bediengerät 250 beispielsweise von einem Insassen eines Fahrzeugs bedient werden kann. Ein Ausführungsbeispiel des Bediengeräts 250 ist in Fig. 4 gezeigt.

Fig. 3 zeigt eine schematische Darstellung eines Klimageräts mit einer luftseitigen Regelung, gemäß einem Ausführungsbeispiel der vorliegenden Erfindung. Das Klimagerät kann bei dem in Fig. 2 gezeigten Klimasystem eingesetzt werden.

Das Klimagerät weist ein Gehäuse 102 auf, in das durch ein Gebläse 104 ein Luftstrom eingeblasen wird. Ein erster Teil des Luftstroms wird durch einen Filter 106 und eine Kühleinrichtung, hier einen Verdampfer 108 geführt. Anschließend verzweigt sich der erste Luftstrom und folgt abhängig von einer Stellung einer Mischklappe 110 entweder einem Kaltweg 112 oder einem Warmweg 114, der über einen Heizkörper 116 führt, zu einem Mischraum 350. Der Mischraum 350 ist durch eine Absperrklappe 118 gegenüber einem Ausgang oder mehreren Ausgängen des Gehäuses 102 abgetrennt. Der Ausgang wird über die Absperrklappe 118 freigegeben oder versperrt. Aus dem Ausgang kann ein temperierter Luftstrom ausströmen. Eine Luftmenge des temperierten Luftstroms kann einer Summe der Luftmengen des ersten und des zweiten Anteils des Luftstroms entsprechen.

Ein zweiter Teil des Luftstroms wird über einen Bypass 352 an dem Filter 106 und dem Verdampfer 108 vorbeigeführt, so dass der zweite Teil des Luftstroms sowohl den Filter 106 als auch den Verdampfer 108 umgeht. Der zweite Teil des Luftstroms wird dem Kaltweg 112 zugeführt. In dem Kaltweg 112 kann sich der zweite Teil des Luftstroms mit einem Teil des ersten Luftstroms vermischen, der nicht durch den Heizkörper 116 strömt. Weiterhin ist in Figur 3 ein Regelor- _ gan 354 im Bypass 352 zu erkennen, welches die Menge der über den Bypass strömenden Luft steuert.

Über eine Stellung der Mischklappe 110 kann eingestellt werden, welcher Anteil des Luftstroms durch den Heizkörper 116 geleitet wird und welcher Anteil des Luftstroms den Heizkörper 116 umgeht. Die Stellung kann über eine Steuerung des Klimageräts eingestellt werden. In einer ersten Stellung kann die Mischklappe 110 den Warmweg 114 vollständig verschließen. In diesem Fall strömen der komplette erste Anteil und der komplette zweite Anteil des Luftstroms über den Kaltweg 112 in den Mischraum 350. In einer zweiten Stellung kann die Mischklappe 110 den Kaltweg 112 vollständig verschließen. In diesem Fall strömen der komplette erste Anteil und der komplette zweite Anteil des Luftstroms über den Warmweg 114 in den Mischraum 350. In Zwischenstellungen der Mischklappe 110 können von den Zwischenstellungen abhängige Anteile des ersten und zweiten Anteils des Luftstroms durch den Kaltweg 112 und den Warmweg 114 strömen.

Über eine weitere Klappe 354 oder eine andere geeignete Regeleinrichtung kann gesteuert werden, welcher Anteil des Luftstroms durch den Verdamper 108 und welcher Anteil des Luftstroms an dem Verdampfer 108, beispielsweise über den Bypass 352, vorbeigeleitet wird.

Gemäß weiteren Ausführungsbeispielen kann der zweite Teil des Luftstroms, der über einen Bypass geführt wird, nicht in den Kaltweg 112 sondern in den Warmweg 114, nach dem Heizkörper 116 geführt werden. Auch kann der der zweite Teil des Luftstroms direkt in den Mischraum 350 geführt werden. Der zweite Teil des Luftstroms kann auch an einer anderen als der gezeigten Stelle von dem ursprünglichen Luftstrom abgezweigt werden. Beispielsweise können der erste und der zweite Teil des Luftstroms auch durch unterschiedliche Öffnungen in das Gehäuse 102 eingeführt werden.

Das in Fig. 3 gezeigte Klimagerät kann beispielsweise für das in Fig. 2 gezeigte Klimasysteme eingesetzt werden, das neben dem Klimagerät, einen Heizkreislauf, einen Kältekreislauf oder ein Heizsystem und ein Kältesystem und ein elektronisches Steuergerät aufweist. Das Steuergerät kann als ein Klimabediengerät ausgeführt sein, welches verschiedene Sensorsignale und Eingaben verarbeiten und das Klimagerät oder Klimasystem entsprechend ansteuern kann. Beispielsweise können mittels des Steuergeräts Ausblastemperatur, Luftmenge, Klappenstellung oder Kompressorhub gesteuert werden. Eine mögliche Ausfühungsform eines Steuergeräts ist in Fig. 4 gezeigt.

Ein Klimagerät, wie es in Fig. 3 gezeigt ist, kann eine Frischluft- oder Umluftansaugung, optional ein Filter, das Gebläse 104, den Filter 106, den Verdampfer 108 und den Heizkörper 116 aufweisen. Diese Komponenten sind in dem Gehäuse 102 mit entsprechenden Steuer- und/oder Regelklappen 110, 118 untergebracht. Ein erster Teil der angesaugten Luft wird über den Verdampfer 108 geleitet und dann in einen Luftstrom aufgeteilt welcher direkt in den Mischraum 350 einströmt (Kaltweg 112) und in einen Luftstrom, der über den Heizkörper 116 ebenfalls zum Mischraum 350 (Warmweg 114) führt. Durch Variation der Luftmenge in diesen beiden Strömungswegen kann jede Temperatur zwischen kalt und warm eingestellt werden. Dies entspricht einer luftseitigen Regelung. In einem weiteren, nicht gezeigten Fall, durchströmt alle Luft auch den Heizkörper 116 und die Leistungsabgabe des Heizkörpers 116 wird kontrolliert. Beispielsweise durch eine Variation der Wassermenge durch den Heizkörper 116, im Falle eines elektrischen Heizelements über die Regelung der zugeführten Leistung, bei Verwendung eines Wärmepumpensystems über die Regelung der Kompressordrehzahl und oder des Hubvolumens. Diese entspricht einer wasserseitigen Regelung.

Übliche Sensor bzw. Signale zu Steuerung des Klimageräts sind ein Temperatursollwert, der über eine Benutzervorgabe eingestellt werden kann und eine Innenraumtemperatur eine Lufttemperatur nach dem Verdampfer. Teilweises sind noch weitere Sensoren oder Signale verfügbar bzw. werden für die Klimaregelung verwendet. Dies kann die Außentemperatur, die Außenfeuchte, die Kühlwassertemperatur, die Temperatur im Mischraum des Klimagerät und/oder an einem oder mehreren Austritten sowie die Scheibeninnentemperatur bzw. einen Beschlagssensor betreffen.

In Abhängigkeit der Innentemperatur, der Lufttemperatur nach Verdampfer, der Temperatursollwertvorgabe am Bediengerät und gegebenenfalls weiteren Sensorsignalen errechnet das Steuergerät eine Sollausblastemperatur für das Klimagerät und eine Sollluftmenge bzw. Gebläseansteuerung. Daraus ergibt sich ein Sollenergieeintrag in die Kabine.

Liegt diese Sollausblastemperatur über der Innenraumtemperatur spricht man vom Heizbetrieb, liegt diese unter dieser vom Kühlbetrieb. Typischerweise liegt die Innerraumtemperatur in der Fahrzeugkabine im eingeregelten Betrieb zwischen 20°C und 25°C, je nach Temperatureinstellung durch den Benutzer.

Wie in Fig. 3 gezeigt wird im Klimagerät selbst eine verbesserte, energieeffiziente Temperaturregelung bzw. eine Feuchtekontrolle im Innenraum durch den Bypass 352 am Verdampfer 108 realisiert. Über diesen Bypass 352 kann unkonditionierte Außenluft in den Mischbereich oder Mischraum 350 des Klimageräts einströmen. Der Bypass 352 selbst ist mit einem entsprechenden Regelorgan zur Regelung der Bypass-Luftmenge ausgestattet.

Bei Verdampferausblastemperaturen um 10°C herrschen üblicherweise Außentemperaturen > 10°C (Kühlbetrieb). Dies bedeutet, dass die Außenluft wärmer ist als die Luft nach dem Verdampfer 108. Mischt man nun der Luft nach dem Verdampfer 108 Außenluft zu, welche über den Bypass 352 strömt, ergibt dies, je nach Temperatur und Menge der Außenluft, die gewünschte höhere Lufttemperatur (Sollausbalstemperatur) im Klimagerät und an den Klimageräteausritten, ohne das im Heizelement 116 eine Energiezufuhr notwendig wird. Damit kann die (Energie-) Effizienz des Klimageräts gesteigert werden.

Weiter wird über die über den Bypass 352 geleitete Außenluft zusätzlich Feuchte in den Innenraum eingetragen, da diese Luft nicht im Verdampfer 108 entfeuchtet wird. Dieser zusätzliche Feuchteeintrag kann genutzt werden um, zumindest im begrenzten Rahmen, die Luftfeuchte im Fahrzeuginnenraum zu kontrollieren indem man der trockeneren Luft nach Verdampfer 108 feuchtere Außenluft beimischt. Somit kann man die relative Feuchte im Innenraum auf einem komfortablen Niveau halten und somit den Komfort der Insassen verbessern.

Auf der Regelungsseite wird ein Temperatursensor vor Verdampfer 108 bzw. im Bypass 352 eingesetzt, welcher die Temperatur der Bypass-Luft ermittelt. Falls auch eine Feuchtekontrolle durchgeführt werden soll, wird noch ein Feuchtesensor vor Verdampfer 108 bzw. im Bypass 352 eingesetzt. Diese Signale werden dem Steuergerät zugeführt welches daraus die Stellgröße für das Regelorgan im Bypass 352 ermittelt.

Der Bypass 352 kann im Klimagerät sinnvollerweise über, unter und/oder seitlich des Verdampfers 108, im Gehäuse 102 intergiert ausgeführt, werden. Weiter sind aber auch ein oder mehrere zusätzliche Bypass-Kanäle denkbar. Bei luftseitigen Konzepten sollte der Bypass 352 bevorzugt im Kaltweg 112 oder im Warmweg 114 nach Heizköper 116 enden, bei wasserseitigen Konzepten im Strömungsweg nach dem Heizkörper 116.

Fig. 4 zeigt eine schematische Darstellung eines Bediengerätes 250, gemäß einem Ausführungsbeispiel der vorliegenden Erfindung. Das Bediengerät 250 kann zum Regeln oder Steuern eines Klimasystems, wie es beispielsweise in Fig. 2 gezeigt ist, oder eines Klimageräts, wie es beispielsweise in Fig. 3 gezeigt ist, eingesetzt werden.

Das Bediengerät 250 weist eine Mehrzahl von Schnittstellen auf, über die Informationen oder Signale empfangen oder ausgegeben werden können. Über eine erste Schnittstelle kann ein Temperatursollwert 460 empfangen werden. Der Temperatursollwert 460 kann fest vorgebgeben oder variabel sein. Der Temperatursollwert 460 kann von einem Bediener in das Bediengerät 250 eingegeben werden oder von eine geeigneten Eingabeeinrichtung empfangen werden. Über eine oder mehrere weitere Schnittstellen kann das Bediengerät 250 mit Sensoren oder Messeinrichtungen verbunden sein, die beispielsweise eine Information über eine Innenraumtemperatur 462, eine Temperatur 464 nach Verdampfer, eine Außentemperatur 466, eine Außenfeuchte 468, eine Kühlwassertemperatur 470 oder eine Mischraumtemperatur 472 bereitstellen. Das Bediengerät 250 ist ausgebildet, um basierend auf den empfangenen Informationen 460, 462, 464, 466, 468, 470, 472 Stellgrößen für das Klimagerät zu ermitteln und als Steuerinformationen auszugeben. So kann das Bediengerät 250 über eine oder mehrere weitere Schnittstellen mit geeigneten Stell- oder Regeleinrichtungen verbunden sein, über die eine von dem Klimagerät bereitzustellende Luftmenge, Lufttemperatur und je nach Ausführungsform auch Luftfeuchtigkeit eingestellt werden kann. Gemäß diesem Ausführungsbeispiel ist das Bediengerät ausgebildet, um eine Information über eine Sollposition 474 der Temperaturmischklappe, eine Sollposition 476 der Auslassklappen, einen Kompressorhub 478 und eine Gebläseansteuerung 480 zu ermitteln und auszugeben.

Die beschriebenen Ausführungsbeispiele sind nur beispielhaft gewählt und können miteinander kombiniert werden. Auch wenn die Ausführungsbeispiele anhand eines Fahrzeugs beschrieben kann der erfindungsgemäße Ansatz auch für andere Einsatzmöglichkeiten vorgesehen werden.

## Patentansprüche

1. Temperiervorrichtung (200) für ein Fahrzeug, mit folgenden Merkmalen:
einer ersten Luftführung zum Führen eines ersten Anteils eines Luftstroms;
einer Kühleinrichtung (108), die in der ersten Luftführung angeordnet ist und ausgebildet ist, um den ersten Anteil des Luftstroms zu kühlen;
einer zweiten Luftführung (352) zum Führen eines zweiten Anteils des Luftstroms;
wobei die zweite Luftführung (352) ausgebildet ist, um den zweiten Anteil des Luftstroms an der Kühleinrichtung (108) vorbei zu einer Mischeinrichtung (350) zu führen;
einer Mischeinrichtung (350), die ausgebildet ist, um den ersten Luftstrom aus der ersten Luftführung mit dem zweiten Anteil des Luftstroms aus der zweiten Luftführung zu mischen, um einen temperierten Luftstrom zu erzeugen, und
**gekennzeichnet durch**
ein Steuergerät (250), das ausgebildet ist, um basierend auf einer Information über eine Temperatur (466) und Feuchtigkeit (468) des Luftstroms, einer Information über eine Temperatur (462, 464) und Feuchtigkeit des temperierten Luftstroms und eines Innenraums des Fahrzeugs sowie einer Solltemperatur (460) und Sollfeuchtigkeit des temperierten Luftstroms und/oder des Innenraums eine Steuerinformation (474, 476, 478, 480) zum Steuern der Temperiervorrichtung zu ermitteln.

2. Temperiervorrichtung (200) gemäß Anspruch 1, bei der die Mischeinrichtung (350) als ein Luftkanalabschnitt ausgeformt ist, der eine Zuführöffnung zum Zuführen des ersten Anteils des Luftstroms, eine Zuführöffnung zum Zuführen des zweiten Anteils des Luftstroms und eine Abführöffnung zum Abführen des temperierten Luftstroms aufweist.

3. Temperiervorrichtung (200) gemäß Anspruch 1 oder 2, mit einer Heizeinrichtung (116), die in Strömungsrichtung des ersten Anteils des Luftstroms nach der Kühleinrichtung (108) angeordnet ist, und ausgebildet ist, um zumindest einen Teil des ersten Anteils des Luftstroms zu erhitzen.

4. Temperiervorrichtung (200) gemäß Anspruch 3, bei der die Heizeinrichtung (116) ferner ausgebildet ist, um zumindest einen Teil des zweiten Anteils des Luftstroms zu erhitzen.

5. Temperiervorrichtung (200) gemäß einem der vorangegangenen Ansprüche, mit einem Gehäuse (102), das mindestens eine Einlassöffnung zum Einlassen des Luftstroms und mindestens eine Auslassöffnung zum Auslassen des temperierten Luftstroms aufweist, wobei die erste Luftführung, die zweite Luftführung (352) und die Mischeinrichtung (350) innerhalb des Gehäuses angeordnet sind.

6. Temperiervorrichtung (200) gemäß einem der vorangegangenen Ansprüche, mit einer Regeleinrichtung (250), die ausgebildet ist, um ein Mengenverhältnis der Anteile der Luftströme zueinander und/oder eine Kühlleistung der Kühleinrichtung (108) zu regeln.

7. Temperiervorrichtung (200) gemäß Anspruch 6, mit einer Messeinrichtung zum Erfassen einer Temperatur und/oder einer Feuchtigkeit des Luftstroms und wobei die Regeleinrichtung (250) ausgebildet ist, um das Mengenverhältnis und/oder die Kühlleistung abhängig von der Temperatur und/oder der Feuchtigkeit zu regeln.

## Claims

1. A temperature control device (200) for a vehicle having the following features:
a first air duct for guiding a first portion of an air flow;
a cooling device (108), which is disposed in the first air duct and is designed to cool the first portion of the air flow;
a second air duct (352) for guiding a second portion of the air flow;
wherein the second air duct (352) is designed to guide the second portion of the air flow past the cooling device (108) to a mixing device (350);
a mixing device (350) which is designed to mix the first air flow from the first air duct with the second portion of the air flow from the second air duct in order to generate a temperature-controlled air flow, and **characterised by**
a control unit (250), which is designed to determine control information (474, 476, 478, 480) for controlling the temperature control device, based on information on air flow temperature (466) and humidity (468), information on temperature (462, 464) and humidity of the temperature-controlled air flow and of an interior of the vehicle, and a setpoint temperature (460) and setpoint humidity of the temperature-controlled air flow and/or of the interior.

2. The temperature control device (200) according to claim 1, wherein the mixing device (350) is configured as an air channel section, which has a supply opening for supplying the first portion of the air flow, a supply opening for supplying the second portion of the air flow, and a discharge opening for discharging the temperature-controlled air flow.

3. The temperature control device (200) according to claim 1 or 2, having a heating device (116), which is disposed in the flow direction of the first portion of the air flow downstream of the cooling device (108) and is designed to heat at least one part of the first portion of the air flow.

4. The temperature control device (200) according to claim 3, wherein the heating device (116) is designed further to heat at least one part of the second portion of the air flow.

5. The temperature control device (200) according to one of the preceding claims, having a housing (102), which has at least one inlet opening for letting in the air flow and at least one outlet opening for letting out the temperature-controlled air flow, whereby the first air duct, the second air duct (352), and the mixing device (350) are disposed within the housing.

6. The temperature control device (200) according to one of the preceding claims, having a regulating device (250), which is designed to regulate a proportion of the portions of the air flows relative to one another and/or a cooling performance of the cooling device (108).

7. The temperature control device (200) according to claim 6, having a measuring device for measuring air flow temperature and/or humidity and whereby the regulating device (250) is designed to regulate the proportion and/or the cooling performance depending on the temperature and/or humidity.

## Revendications

1. Dispositif pour tempérer un flux d'air (200) pour un véhicule, ledit dispositif ayant les caractéristiques suivantes et étant :
doté d'un premier guidage d'air servant au guidage d'une première partie d'un flux d'air ;
doté d'un dispositif de refroidissement (108) qui est disposé dans le premier guidage d'air et est conçu pour refroidir la première partie du flux d'air ;
doté d'un second guidage d'air (352) servant au guidage d'une seconde partie du flux d'air ;
où le second guidage d'air (352) est conçu pour guider la seconde partie du flux d'air, passant devant le dispositif de refroidissement (108), en direction d'un dispositif de mélange (350) ;
doté d'un dispositif de mélange (350) qui est conçu pour mélanger le premier flux d'air provenant du premier guidage d'air, avec la seconde partie du flux d'air provenant du second guidage d'air, pour produire un flux d'air tempéré, et
**caractérisé par** un appareil de commande (250) qui est conçu pour déterminer une information de commande (474, 476, 478, 480) servant à commander le dispositif prévu pour tempérer un flux d'air, ladite information de commande étant déterminée en se basant sur une information concernant une température (466) et une humidité (468) du flux d'air, sur une information concernant une température (462, 464) et une humidité du flux d'air tempéré et de l'habitacle du véhicule, ainsi qu'en se basant sur une température théorique (460) et sur une humidité théorique du flux d'air tempéré et / ou de l'habitacle.

2. Dispositif pour tempérer un flux d'air (200) selon la revendication 1, dans lequel le dispositif de mélange (350) est formé comme une partie de conduit d'air qui présente une ouverture d'alimentation servant à l'alimentation de la première partie du flux d'air, une ouverture d'alimentation servant à l'alimentation de la seconde partie du flux d'air et une ouverture d'évacuation servant à l'évacuation du flux d'air tempéré.

3. Dispositif pour tempérer un flux d'air (200) selon la revendication 1 ou 2, comprenant un dispositif de chauffage (116) qui est disposé en aval du dispositif de refroidissement (108), par rapport à la direction d'écoulement de la première partie du flux d'air, et est conçu pour chauffer au moins une part de la première partie du flux d'air.

4. Dispositif pour tempérer un flux d'air (200) selon la revendication 3, dans lequel le dispositif de chauffage (116) est conçu en outre, pour chauffer au moins une part de la seconde partie du flux d'air.

5. Dispositif pour tempérer un flux d'air (200) selon l'une quelconque des revendications précédentes, comprenant un carter (102) qui présente au moins une ouverture d'entrée prévue pour l'entrée du flux d'air et au moins une ouverture de sortie prévue pour la sortie du flux d'air tempéré, où le premier guidage d'air, le second guidage d'air (352) et le dispositif de mélange (350) sont disposés à l'intérieur du carter.

6. Dispositif pour tempérer un flux d'air (200) selon l'une quelconque des revendications précédentes, comprenant un équipement de régulation (250) qui est conçu pour réguler un rapport de proportion des parties des flux d'air, l'une par rapport à l'autre, et / ou pour réguler une puissance frigorifique du dispositif de refroidissement (108).

7. Dispositif pour tempérer un flux d'air (200) selon la revendication 6, comprenant un dispositif de mesure servant à déterminer une température et / ou une humidité du flux d'air, et où l'équipement de régulation (250) est conçu, pour réguler le rapport de proportion et / ou la puissance frigorifique en fonction de la température et / ou de l'humidité.
